## Europäisches Patentamt
## European Patent Office
## Office européen des brevets

(11) Veröffentlichungsnummer: **0 283 758**
**A2**

## EUROPÄISCHE PATENTANMELDUNG

(21) Anmeldenummer: **88102856.7**

(22) Anmeldetag: **26.02.88**

(30) Priorität: **25.03.87 CH 1136/87**

(43) Veröffentlichungstag der Anmeldung:
**28.09.88 Patentblatt 88/39**

(84) Benannte Vertragsstaaten:
**AT DE FR GB IT NL SE**

(51) Int. Cl.⁴: **H03K 3/84**

(71) Anmelder: **Crypto Aktiengesellschaft**
**Zugerstrasse 42**
**CH-6312 Steinhausen(CH)**

(72) Erfinder: **Rueppel, Rainer A.**
**Bahnhofstrasse 242**
**CH-8623 Wetzikon(CH)**
Erfinder: **Widman, Kjell-Owe**
**Rössliweg 3, Buonas**
**CH-6343 Rotkreuz(CH)**

(74) Vertreter: **Blum, Rudolf Emil Ernst et al**
**c/o E. Blum & Co Patentanwälte Vorderberg**
**11**
**CH-8044 Zürich(CH)**

(54) **Taktmanipulierter, autonomer Automat.**

㊙ Zur Erzeugung von pesudozufälligen Bitfolgen hoher statistischer Qualität wird ein taktmanipulierter, autonomer Automat, zum Beispiel ein maximallanges Schieberegister (1), in Funktion seiner Ausgangssignale getaktet. Beim Ausgangssignal 0 werden zum Beispiel d-Taktschritte, beim Ausgangssignal 1 k-Taktschritte ausgeführt zur Erzeugung des nächsten Ausgangssignals. Die so erzeugten Bitfolgen haben voraussehbare und verbesserte statistische Eigenschaften bei einfachem Schaltungsaufbau.

Fig. 2

EP 0 283 758 A2

## Taktmanipulierter, autonomer Automat

Die Erfindung betrifft einen taktmanipulierten, autonomen Automaten. Autonome Automaten sind Rechenwerke, deren Ausgangssequenz eine Funktion $f_o(S_i)$ ihres inneren Zustands $S_i$ ist, welcher sich seinerseits gemäss einer Funktion $S_{i+1} = f_s(S_i)$ aus dem vorangehenden inneren Zustand entwickelt. Die Erzeugung des Ausgangssignals und des nächsten inneren Zustandes erfolgt in einem starren Taktrahmen, wobei der Betriebstakt von aussen zugeführt wird. Ein typisches Beispiel eines solchen autonomen Automaten ist das sog. maximallange Schieberegister (m - LFSR). Dies ist ein rückgekoppeltes Schieberegister mit n-Stufen, dessen Rückkopplung so gewählt ist, dass die maximallange Periode von $N = 2^n-1$ erzeugt wird. Solche Konfigurationen sind bekannt (U.Tietze, Ch. Schenk, Halbleiterschaltungstechnik, Berlin 1976, S. 590ff.) und dienen z.B. zur Erzeugung von pseudozufälligen Binärfolgen.

Für verschiedene Anwendungen, insbesondere in der Kryptologie geht das Bestreben dahin, mittels möglichst einfach aufgebauten und mathematisch beherrschbaren Automaten der erwähnten Art, pseudozufällige Binärfolgen mit möglichst langer Periode und möglichst grosser linearer Komplexität zu erzeugen. Die lineare Komplexität ist dabei ein bekanntes Mass für die Qualität pseudozufälliger Binärfolgen, welches im Idealfall die Grösse der Periodenlänge erreicht.

Diese Aufgabe wird erfindungsgemäss dadurch gelöst, dass die Taktung des autonomen Automaten manipuliert wird, und zwar in Funktion seiner eigenen Ausgangssignale. Vorzugsweise weist der Automat ein maximallanges Schieberegister auf, dessen Ausgang mit einer Logikschaltung verbunden ist, welche in Funktion des jeweiligen Symbols der Ausgangssequenz eine vorbestimmte Anzahl Taktimpulse an den Takteingang des Schieberegisters liefert, um dieses um eine entsprechende Anzahl Schritte weiterzuschalten, wobei die Ausgangssequenz durch die jeweils nach der Weiterschaltung am Ausgang des Schieberegisters anstehenden Symbole gebildet wird.

Ueberraschenderweise gelingt es damit, die Qualität der Ausgangssequenz (u.a. lineare Komplexität) im Verhältnis zur Anzahl verwendeter Stufen n zu verbessern.

Nachfolgend soll ein Ausführungsbeispiel der Erfindung anhand der Zeichnungen näher erläutert werden. Es zeigen:

Fig. 1 ein fünfstufiges, maximallanges Schieberegister,

Fig. 2 eine schematische Darstellung der Taktbeeinflussung durch das Ausgangssignal,

Fig. 3 eine Schaltung in Blockdarstellung als mögliche Ausführung der Erfindung,

Fig. 4 ein Laufzeitdiagramm zu dieser Schaltung, und

Fig. 5 eine allgemeine Darstellung des Ablaufs bei erfindungsgemässen Automaten.

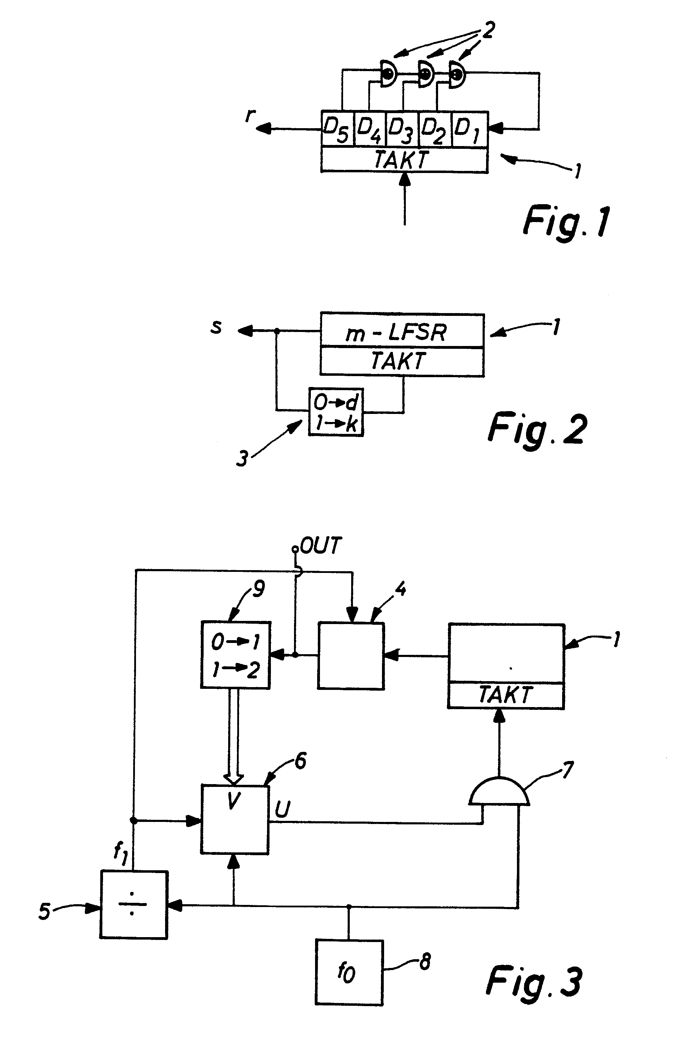

In Fig. 1 ist zunächst zur Illustration ein 5-stufiges, maximallanges Schieberegister 1 gezeigt. Dieses besteht aus fünf Zellen $D_1$ bis $D_5$, die gemäss dem Rückkopplungspolynom $C(D) = 1 + D^2 + D^3 + D^4 + D^5$ über Exklusiv-ODER -Gatter 2 an den Eingang zurückgekoppelt sind. Ist der Ausgangszustand 11111 so ergibt sich am Ausgang die Sequenz $r = 1 1 1 1 1 0 0 1 0 0 1 1 0 0 \ldots$ mit der Periodenlänge 31.

In Fig. 2 ist ein entsprechendes maximallanges Schieberegister 1 gezeigt, dessen Ausgang über eine Logikschaltung 3 an den Takteingang rückgekoppelt ist. Diese Logikschaltung ist so aufgebaut, dass bei einem am Ausgang des Schieberegisters 1 auftretenden Signal 0 das Schieberegister für d Schritte, beim Signal 1 für k Schritte getaktet wird. Das Schieberegister 1 erzeugt also seinen eigenen Takt gemäss der Regel:

$$0 \rightarrow d$$
$$1 \rightarrow k \qquad (1)$$

Wählt man für das in Fig. 1 gezeigte Schieberegister 1 speziell $[d, k] = [1, 2]$, so wird das Schieberegister beim Ausgangssignal 0 um einen Schritt, beim Ausgangssignal 1 um 2 Schritte vorgeschoben. Die oben erwähnte Sequenz r ändert sich wie folgt zu s [1, 2] :

$$r = 1\ 1\ 1\ 1\ 1\ 0\ 0\ 1\ 0\ 0\ 1\ 1\ 0\ 0\ 0\ 0\ 1\ 0\ 1\ 1\ 0\ 1\ 0\ 1\ 0\ 0\ldots$$

$$s[1,2] = 1\ 1\ 1\ 0\ 1\ 0\ 1\ 0\ 0\ 0\ 0\ 1\ 1\ 0\ 1\ 1\ 0\ldots$$

Wie man daraus ersieht, nimmt die Periodenlänge der Sequenz s zwar auf 20 ab, jedoch erhöht sich ihre lineare Komplexität. Für die erwähnte Taktungsregel (1) kann gezeigt werden, dass für maximallange Schieberegister mit Rückkopplungspolynom L - ten Grades für die Periodenlänge gilt:

$$T = \lfloor (2\ 3)\ (2^L - 1) \rfloor \qquad (2)$$

Die Häufigkeit N(b) der Bitwerte b innerhalb einer Periode beträgt:

$$N(1) = \lfloor (1\ 3\ (2^L - 1) \rfloor \qquad (3)$$
$$N(0)\ T - N(1)\ (4)$$

Bei geradzahligem L ergibt sich für die Bits 0 und 1 dieselbe Häufigkeit N(0) = N(1) = T/2. Die Bithäufigkeiten von 1 und 0 sind damit optimal ausgeglichen.

Es wurde ferner festgestellt, dass für die erwähnte Taktungsregel [d,k] = [1,2] im Mittel über alle primitiven Rückkopplungspolynome vom Grad L = 5,6,7,8 folgende Periodenlängen T, mittlere lineare Komplexitäten $L_{avg}$ und minimale lineare Komplexitäten $L_{min}$ auftreten:

| L | 5 | 6 | 7 | 8 |
|---|---|---|---|---|
| T | 20 | 42 | 84 | 170 |
| $L_{avg}$ | 19,3 | 38,7 | 82 | 169,3 |
| $L_{min}$ | 16 | 33 | 78 | 166 |

Daraus zeigt sich insbesondere die Nähe der mittleren, linearen Komplexität $L_{avg}$ zur Periodenlänge T sowie die Grösse der auftretenden minimalen linearen Komplexität $L_{min}$.

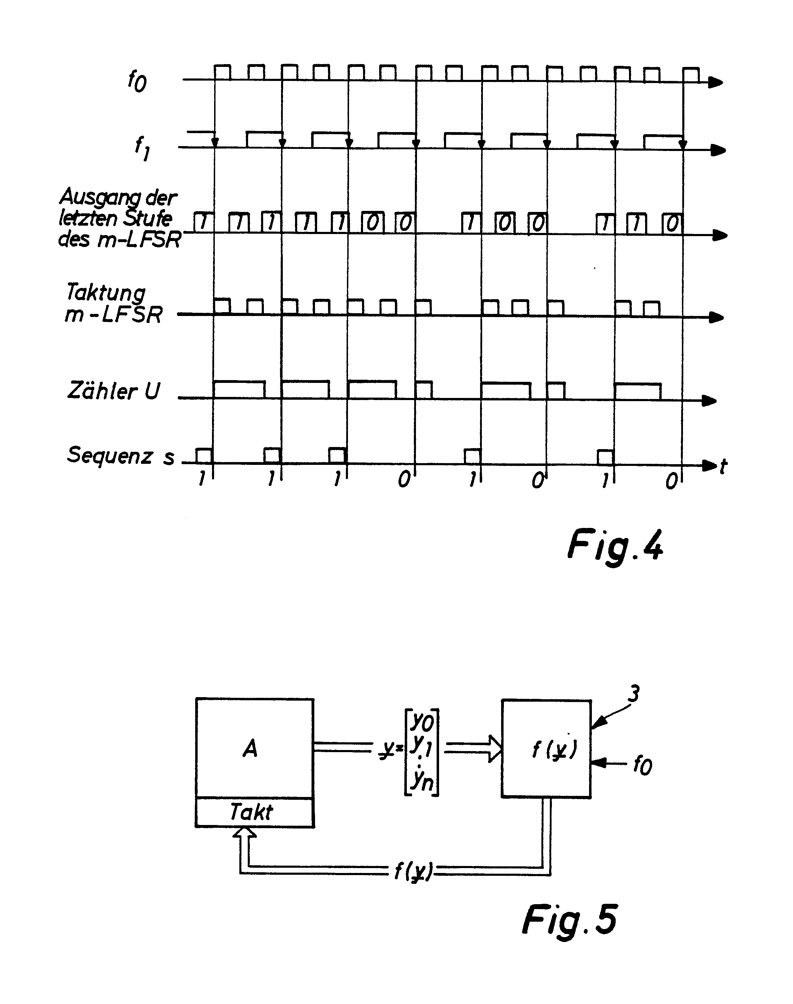

Anhand der Figuren 3 und 4 soll gemäss der obigen Rückkopplungsregel nun eine mögliche Schaltung zum Aufbau eines solchen Automaten erläutert werden. Es wird dabei auf das oben erläuterte Schieberegister 1 Bezug genommen. Der Ausgang des maximallangen Schieberegisters 1 ist mit einem Gatter 4 verbunden, das den Auslesevorgang aus dem Schieberegister steuert. Es erhält ein Frequenzsignal $f_1$, das in einem Frequenzteiler 5 aus einer Grundfrequenz fo eines Taktgebers 8 abgeleitet wird. Im vorliegenden Fall ist $f_1$ = fo/2. Jeweils bei fallender Flanke des Frequenzsignals $f_1$ wird der Inhalt der Ausgangsstufe des Schieberegisters 1 ausgelesen und steht einerseits am Ausgang Out sowie an einem Kodierer (Umwandler) 9 zur Verfügung. Der Kodierer erzeugt entsprechend der Taktungsregel binärkodierte Ausgangssignale d und k, je nachdem, ob am Eingang eine 0 oder eine 1 anliegt. Im vorliegenden Fall sind diese Ausgangssignale 0,1 (dezimal 1) und 1,0 (dezimal 2). Diese Signale werden als Vorwahlzahlen einem Vorwahlzähler 6 zugeführt. Dieser wird bei der fallenden Flanke des Frequenzsignals $f_1$ gestartet und zählt im Takt des Frequenzsignals fo bis zur vorgewählten Zahl. Während dem Zählvorgang erscheint am Ausgang des Zählers das Signal U = 1. Ist die vorgewählte Zahl erreicht, wird der Ausgang U = 0. Ein entsprechender Vorwahlzähler ist bei U. Tietze, Ch.Schenk, Halbleiterschaltungstechnik, Berlin 1976, S.581 ff. beschrieben. Das Ausgangssignal U des Vorwahlzählers wird zusammen mit den Frequenzsignal fo einem UND-Tor 7 zugeführt, welches die der Vorwahlzahl entsprechende Anzahl Impulse an den Takteingang des maximallangen Schieberegisters lässt.

In Fig. 4 ist der beschriebene Vorgang in einem Laufzeitdiagramm dargestellt. Am Ausgang des maximallangen Schieberegisters erscheint die oben erläuterte Sequenz r = 1 1 1 1 1 0 0 1 0 0 1 1 0 ... Diese wird in der genannten Weise zur Sequenz s = 1 1 1 0 1 0 1 0 gewandelt, welche am Ausgang OUT der Schaltung ansteht.

Die erläuterte Schaltung kann für beliebige andere Taktungsregeln verwendet werden, wozu der Kodierer 9 entsprechend programmiert werden kann. Der Teilungsfaktor des Frequenzteilers 5 ist daran so anzupassen, dass innerhalb einer Frequenzperiode von $f_1$ die maximale Anzahl vorgesehener Taktimpulse gemäss Regel (1) enthalten sind.

Die beschriebene Schaltung lässt sich ferner auf andere, taktmanipulierte, autonome Automaten verallgemeinern. Statt der beschriebenen Bitsequenzen können auch Bitvektorsequenzen $\underline{y} = [y_o,..,y_n]$ in entsprechender Weise erzeugt werden. Fig. 5 zeigt dies schematisch. Der Automat A (z.B. mehrere, parallel angeordnete, maximallange Schieberegister) erzeugt Bitvektoren $\underline{y}$. Aus diesen wird in einer logischen Schaltung nach einer Taktungs regel f ($\underline{y}$) der Takt des Automaten in der erläuterten Weise abgeleitet.

Um die vorteilhaften Eigenschaften der Signalsequenzen von derart ausgebildeten Automaten zu illustrieren, ist ein solcher Automat, der gemäss den Fig. 1 bis 3 aufgebaut ist, mit einem normal geschalteten maximallangen Schieberegister zu vergleichen. Bei letzterem beträgt mit einem Rückkopplungspolynom vom Grade L die Periodenlänge $2^L - 1$ und die lineare Komplexität L. Beim beschriebenen Automaten ergibt sich für beide Werte $\frac{2}{3}(2^L - 1)$. Beim herkömmlichen, maximallangen Schieberegister wächst die lineare Komplexität also proportional zu L, während sie beim beschriebenen Automaten exponentiell zunimmt. Dies wirkt sich insbesondere bei den in der Praxis notwendigen, grossen L-Werten wesentlich aus. Ein Vorteil der beschriebenen Automaten liegt zudem in ihrer guten, mathematischen Ueberblickbarkeit. Die erzeugten Bitsequenzen sind insbesondere als Schlüsselfolgen in Verschlüsselungsgeräten oder in der Bandspreiz-Uebermittlung (spread spectrum communications) optimal verwendbar. Die beschriebene Vorrichtung kann deshalb z.B. als Zufallszeichengenerator in einer Verschlüsselungsvorrichtung verwendet werden.

## Ansprüche

1. Taktmanipulierter, autonomer Automat, dadurch gekennzeichnet, dass seine Taktung in Funktion seiner Ausgangssignale erfolgt.

2. Taktmanipulierter, autonomer Automat mit einem maximallangen Schieberegister (1), dadurch gekennzeichnet, dass dessen Ausgang mit einer Logikschaltung (3) verbunden ist, welche in Funktion des jeweiligen Signals der Ausgangssequenz (s) eine vorbestimmte Anzahl Taktimpulse an den Takteingang des Schieberegisters liefert, um dieses um eine entsprechende Anzahl Schritte weiterzuschalten, wobei die Ausgangssequenz durch die jeweils nach der Weiterschaltung am Ausgang des Schieberegisters anstehenden Signale gebildet ist.

3. Taktmanipulierter, autonomer Automat nach Anspruch 2, wobei die Ausgangssequenz eine Bitsequenz ist, dadurch gekennzeichnet, dass die Logikschaltung (3) nach der Regel

$$0 \rightarrow d$$
$$1 \rightarrow k$$

aus den Signalen 0 bzw. 1 eine Anzahl d bzw. k Taktimpulse für den Takteingang des maximallangen Schieberegisters (1) erzeugt.

4. Taktmanipulierter, autonomer Automat nach einem der vorangehenden Ansprüche, dadurch gekennzeichnet, dass ein Frequenzgeber (8) vorgesehen ist zur Fortschaltung des Automaten mit einer Frequenz fo und dass eine zweite Frequenz $f_i <$ fo zur Erzeugung der Ausgangssequenz verwendet wird.

5. Verwendung des taktmanipulierten Automaten nach einem der vorangehenden Ansprüche als Schlüsselgenerator in einem Verschlüsselungsgerät.

Fig.1

Fig.2

Fig.3

Fig.4

Fig.5